# EUROPEAN PATENT APPLICATION

(11) **EP 1 780 451 A1**
(43) Date of publication of application: **02.05.2007**
(21) Application number: 05425761.3
(22) Date of filing: 28.10.2005
(51) Int. Cl.: F16K 11/02, F16K 11/10, F16K 15/14

(54) **Flexible three-way valve**

(71) Applicant: Pres-Block S.P.A., 10040 Caselette (IT)
(72) Inventor: Nicolino, Aldo, 10040 Caselette (IT)
(74) Representative: D'Angelo, Fabio

(57) **Abstract**

It is described a three-way valve (1) provided with a hollow body (2) internally defining a fluid circulation chamber (3) and having two inlet sections (4, 5) and one outlet section (6), and with variable configuration shutter means (8) sealingly accommodated inside the chamber (3) and adapted to allow the outlet section (6) to be alternatively connected with the inlet sections (4, 5) maintaining a continuous fluid-tight separation between the inlet sections (4, 5) themselves; the shutter means (8) integrally including a single shutter element (10) having flexible sealing lips (11, 12) cooperating with the respective inlet sections (4, 5).

## Description

The present invention relates to a three-way valve, in particular of the type adapted to be used in air and water circulation conduits in machines for the preparation of several types of beverages, such as for example coffee, tea, chocolate, milk, etc., to which explicit reference will be made in the following description without loosing in generality.

As it is known, machines of the aforementioned type, in which the required beverage is obtained by mixing a substance in either powder (chocolate, milk) or granular (coffee) or leaf (tea) form with water, are very common on the market. In particular, the aforesaid substance is normally contained in a wafer adapted to be inserted in a specific housing arranged at the single dispensing outlet of the machine; the flow of water through the wafer determines the instantaneous preparation and dispensing of the requested beverage.

After each use, the dispensing outlet is cleaned to prevent the next beverage from being polluted from residues of the previous beverage. Such cleaning operation is normally obtained by sending pressurised air into the dispensing outlet so as to allow the release and the consequent elimination of the residues of the beverage just prepared.

In order to obtain the above described functions, the machines of the known type are provided with two circuits, one for water and one for air, which flow in respective inlet sections of a three-way valve, whose outlet section is instead connected to the dispensing outlet of the beverage.

The valve must selectively allow the connection of the two water and air circuits with the beverage dispensing outlet, but not the communication between the two circuits themselves. This is generally obtained by prearranging a series of appropriately and reciprocally combined shutter elements inside the valve.

The valves of the type described above, though functionally efficient and reliable, are liable to further improvements; in particular, a need is felt in the sector to reduce the number of component parts in order to reduce the number of reciprocally mobile parts and consequently to simplify assembly operations and reduce costs.

It is an object of the present invention to provide a three-way valve designed to meet the aforementioned need in a straightforward, inexpensive manner, while ensuring at least the same levels of functionality and reliability of the valves of the known type.

The above-mentioned object is achieved by a three-way valve as claimed in claim 1.

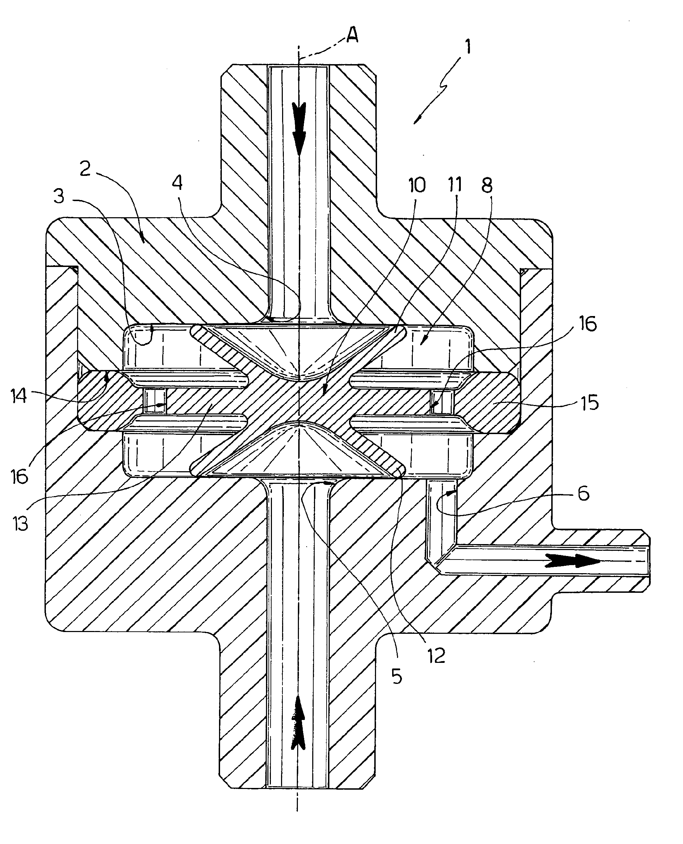

A preferred, non-limiting embodiment of the three-way valve according to the present invention will be described by way of example with reference to the accompanying drawing which shows a cross-section of the valve itself.

With reference to the accompanying drawing, it is indicated as a whole by 1 a three-way valve in accordance with the present invention.

The valve 1 is of the type adapted to be used in machines (known per se and not shown) for the preparation of several types of beverages, such as for example coffee, tea, chocolate, milk, and having a single dispensing outlet of the beverages themselves.

In particular, the valve 1 allows the connection of two separate circuits (not shown) of the aforementioned machines with the dispensing outlet of the beverages, maintaining completely independent the two circuits themselves.

More generally, the valve 1 is adapted to be used in all those applications in which two circulation circuits of respective fluids must be alternatively connected to a same conduit, preventing at the same time the fluid communication between the circuits themselves. The fluids passing through the valve 1 may be water and air, as in the example described below, or may be of different type, including the case in which the same type of fluid is used in both circuits.

The valve 1 essentially comprises a hollow body 2, which internally defines a fluid circulation chamber 3 having, in the case shown, generally cylindrical conformation of axis A, and presenting two inlet sections 4, 5 and one outlet section 6 communicating with the chamber 3 itself.

According to the preferred embodiment of the invention shown in the accompanying drawing, the inlet sections 4, 5 are obtained on opposite sides of the chamber 3, extend coaxially along the axis A and are connected respectively to the water and air circulation circuits of the quoted machine for the preparation of beverages. More specifically, each inlet section 4, 5 is obtained through the body 2 and is defined by a respective through conduit leading, at one end, into the chamber 3 and connectable, at its opposite end, to a respective fluid circulation circuit.

Similarly, the outlet section 6 extends, with respect to the chamber 3, from the same side of the inlet section 5 and is also defined by a through conduit leading, at one end, into the chamber 3 itself and connectable, at its opposite end, to the dispensing outlet of the beverages of the aforesaid machine.

The valve 1 also comprises shutter means 8 accommodated inside the chamber 3 and selectively mobile to allow the fluid connection of each inlet section 4, 5 to the outlet section 6 while maintaining fluid-tightly separate the inlet sections 4, 5 themselves.

Advantageously, the shutter means 8 are integrally defined by a single shutter element 10 having sealing lips 11, 12 cooperating with the respective inlet sections 4, 5 and elastically flexible under the action of the fluid pressure to allow the outlet section 6 to be alternatively connected to the inlet sections 4, 5 themselves.

In particular, the shutter element 10 integrally comprises a main discoidal portion 13, which fluid-tightly engages an annular peripheral groove 14 of axis A of the chamber 3, and from which the respective sealing lips 11, 12 overhangingly protrude on opposite sides.

More precisely, the discoidal portion 13 peripherally ends with a widened section annular rib 15 engaged within the groove 14 so as to perform the function of a sealing lip and is provided at the rib 15 itself, of a plurality of through openings 16 for allowing the fluid communication between the inlet section 4 and the outlet section 6, as explained in greater detail below.

Each sealing lip 11, 12, in absence of fluid pressure forces, makes contact with the delimitation surface of the chamber 3 around the respective inlet section 4, 5 and presents a concave conformation towards the latter.

In greater detail, each sealing lip 11, 12 presents, towards the respective inlet section 4, 5, is dome shaped with increasing dimensions towards the inlet section 4, 5 itself.

In use, when the flow of a first fluid, for example water, is activated through the inlet section 4, the respective sealing lip 11, by effect of the pressure exerted by said fluid, is flexed towards the discoidal portion 13 drawing away from the delimitation surface of the chamber 3; in this way, the aforesaid fluid can flow through the openings 16 of the discoidal portion 13 of the shutter element 10 reaching the sealing lip 12 and the outlet section 6. It is thus activated the fluid communication between the inlet section 4 and the outlet section 6, while the passage of fluid towards the input section 5 is blocked by the sealing lip 12, which, by effect of the pressure, increases adherence onto the delimitation surface of the chamber 3 around the input section 5 itself.

If the flow of a second fluid, for example air, is instead activated through the input section 5, the behaviour of the shutter element 10 is entirely similar; in this case, the sealing lip 12 is flexed towards the discoidal portion 13 allowing the fluid communication between the input section 5 and the outlet section 6, while the sealing lip 11 increases its hold against the delimitation surface of the chamber 3 around the input section 4 factually preventing the fluid, which has crossed the openings 16 of the discoidal portion 13, from reaching the input section 4 itself.

The advantages of valve 1 according to the present invention will be clear from the foregoing description.

In particular, the valve 1 consists of only two components, an external hollow body 2 and a shutter element 10 having sealing lips 11, 12 of elastically flexible material; in this manner, the assembly times and the total construction costs of the valve 1 are reduced.

Clearly, changes may be made to valve 1 as described and illustrated herein without, however, departing from the scope of the accompanying claims.

## Claims

1. A three-way valve (1) comprising:
- a hollow body (2) internally defining a fluid circulation chamber (3) and having a first and a second inlet sections (4, 5) for respective fluids and an outlet section (6) connected to said first and second inlet sections (4, 5) through said chamber (3); and
- variable configuration shutter means (8) sealingly accommodated inside said chamber (3) and adapted to allow said outlet section (6) to be alternatively connected to said first and second inlet sections (4, 5) maintaining a fluid-tight separation between the inlet sections (4, 5) themselves;
**characterised in that** said shutter means (8) integrally comprise a single shutter element (10) having flexible sealing lips (11, 12) cooperating with said first and second inlet sections (4, 5).

2. A valve according to claim 1, **characterised in that** said shutter element (10) presents at least one through opening 16).

3. A valve according to claim 1 or 2, **characterised in that** each said sealing lip (11, 12) surrounds the respective inlet section (4, 5) and presents a concave conformation towards the same.

4. A valve according to claim 3, **characterised in that** each said sealing lip (11, 12) presents increasing dimensions towards said respective inlet section (4, 5).

5. A valve according to claim 3 or 4, **characterised in that** each said sealing lip (11, 12) is dome-shaped towards said respective inlet section (4, 5) .

6. A valve according to any of the preceding claims, **characterised in that** said first and second inlet sections (4, 5) are obtained on opposite parts of said chamber (3).

7. A valve according to claim 6, **characterised in that** said shutter element (10) presents a main discoidal portion (13) sealingly engaging an annular peripheral groove (14) of said chamber (3) having an axis parallel to the axis (A) of said first and second inlet sections (4, 5), and that said sealing lips (11, 12) overhangingly protrude from opposite sides of said discoidal portion (13).

8. A valve according to any of the preceding claims, **characterised in that** said outlet section (6) is obtained on the same side as one (5) of said first and second inlet sections (4, 5).
